# NEW EUROPEAN PATENT SPECIFICATION

(11) **EP 3 741 184 B3**
(45) Date of publication of this specification: **17.05.2023**
(45) Mention of the grant of the patent: 22.09.2021
(21) Application number: 19724605.1
(22) Date of filing: 05.04.2019
(51) Int. Cl.: H04W 76/11, H04W 8/26, H04W 60/00

(54) **MANAGING THE 5G-S-TMSI TEMPORARY SUBSCRIBER IDENTIFIER HAVING AN EXTENDED LENGTH DURING CONNECTION SETUP IN 5G NETWORKS**
VERWALTUNG DER TEMPORÄREN TEILNEHMERKENNUNG 5G-S-TMSI MIT ERWEITERTER LÄNGE BEIM VERBINDUNGSAUFBAU IN 5G-NETZEN
GESTION DE L'IDENTIFIANT TEMPORAIRE D'ABONNÉ 5G-S-TMSI AYANT UNE LONGUEUR ÉTENDUE LORS DE L'ÉTABLISSEMENT DE LA CONNEXION DANS LES RÉSEAUX 5G

(30) Priority: 05.04.2018 US 201862653464 P
(43) Date of publication of application: 25.11.2020
(73) Proprietor: Telefonaktiebolaget LM Ericsson (publ), 164 83 Stockholm (SE)
(72) Inventor: LINDHEIMER, Christofer, 592 31 Vadstena (SE); ARSHAD, Malik Wahaj, 194 31 Upplands Vasby (SE); DA SILVA, Icaro L. J., 170 77 Solna (SE); MILDH, Gunnar, 192 55 Sollentuna (SE); SCHLIWA-BERTLING, Paul, 590 71 Ljungsbro (SE)
(74) Representative: Haseltine Lake Kempner LLP
(86) International application number: PCT/IB2019/052816
(87) International publication number: WO 2019/193562

(56) References cited:
- US-A1- 2016 295 398
- ERICSSON: "3GPP TSG-RAN WG2 Meeting #101; R2-1802635; Signalling aspects of network slicing", 3GPP DRAFT; R2-1802635- SIGNALLING ASPECTS OF NETWORK SLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400222, Retrieved from the Internet: URL:http://www.3gpp.org/ftp/tsg%5Fran/WG2% 5FRL2/TSGR2%5F101/Docs/ [retrieved on 2018-02-16]
- SA2: "3GPP SA WG2 Meeting #S2-126; R2-182964; LS on 5G-S-TMSI code space", 3GPP DRAFT; S2-182964-LS_ON_5G-S-TMSI-SPACE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Montreal, Canada; 20180226 - 20180302 2 March 2018 (2018-03-02), XP051394523, Retrieved from the Internet: URL:http://www.3gpp.org/ftp/Meetings%5F3GP P%5FSYNC/SA2/Docs/ [retrieved on 2018-03-02]
- 3GPP TS 23.003 V15.3.0 (2018-03): "3GPP TS 23.003 V15.3.0 (2018-03); 3rd Generation Partnership Project; Technical Specification Group Core Network and Terminals; Numbering, addressing and identification (Release 15)", 3GPP STANDARD; TECHNICAL SPECIFICATION; 3GPP TS 23.003, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V15.3.0, 27 March 2018 (2018-03-27), pages 1-118, XP051450507, [retrieved on 2018-03-27]
- ERICSSON: "3GPP TAG-RAN WG2 Meeting #102; R2-1806847; Split of 5G-S-TMSI", 3GPP DRAFT; R2-1806847, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 10 May 2018 (2018-05-10), XP051463889, Retrieved from the Internet: URL:http://www.3gpp.org/ftp/tsg%5Fran/WG2% 5FRL2/TSGR2%5F102/Docs [retrieved on 2018-05-10]
- ERICSSON: "3GPP TAG-RAN WG2 Meeting #AH 1807; R2-1810281; Draft CR to 38.331 on 5G-S-TMSI partitioning", 3GPP DRAFT; R2-1810281, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 21 June 2018 (2018-06-21), XP051526070, Retrieved from the Internet: URL:http://www.3gpp.org/ftp/tsg%5Fran/WG2% 5FRL2/TSGR2%5FAHs/2018%5F07%5FNR/Docs/R2%2 D1810281%2Ezip [retrieved on 2018-06-21]
- 3GPP TS 38.331 V15.3.0 (2018-09): "3GPP TS 38.331 V15.3.0 (2018-09); 3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.3.0, 26 September 2018 (2018-09-26), pages 1-445, XP051487433, [retrieved on 2018-09-26]

## Description

### TECHNICAL FIELD

Certain embodiments of the present disclosure relate, in general, to wireless communications and, more particularly, to transmitting wireless device identifier information.

### BACKGROUND

Generally, all terms used herein are to be interpreted according to theirordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In the new third generation partnership project (3GPP) standard 5GS, the system and architecture for 5G and various state machines are described.

One "state machine" is the connection management state model (CM-state model), described in 3GPP technical specification (TS) 23.501.

Generally, connection management comprises of functions for establishing and releasing signaling connections between a user equipment (UE) and core network node. In 5G, this node is called the Access and Mobility Management Function (AMF).

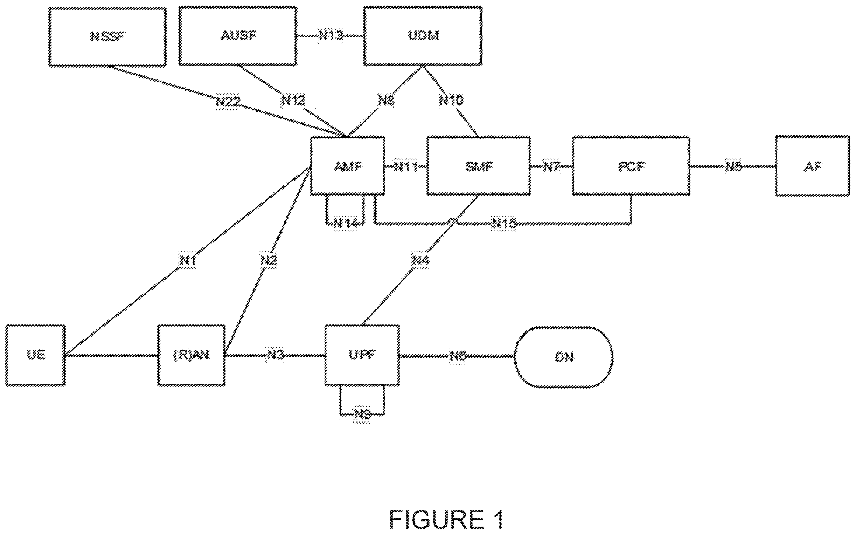

FIGURE 1 illustrates an example of a 5G system architecture, including Nodes (e.g., AMF, UE, (R)AN) and interface names. Connection management relates to signaling connection over the N1 interface illustrated below.

The signaling connection over N1 is used to enable Non-Access-Stratum (NAS) signaling exchange between the UE and the core network. It comprises both the Access Node (AN) signaling connection between the UE and the AN and the N2 connection, between the AN and the AMF.

Furthermore, there are two CM-states defined, CM-IDLE and CM-CONNECTED.

A UE in CM-IDLE has no NAS signaling connection established over N1 to the AMF and in this CM-state, the UE performs cellselection/reselection and public land mobile network (PLMN) selection. In addition, there is no AN signaling connection or N2/N3 connections for a UE in idle state.

If the UE is registered to the network and in CM-IDLE, it shall usually listen to and respond to paging messages from the network. This means that in CM-IDLE the UE is still reachable. If initiated by user/UE, the UE shall also be able to perform a service request procedure.

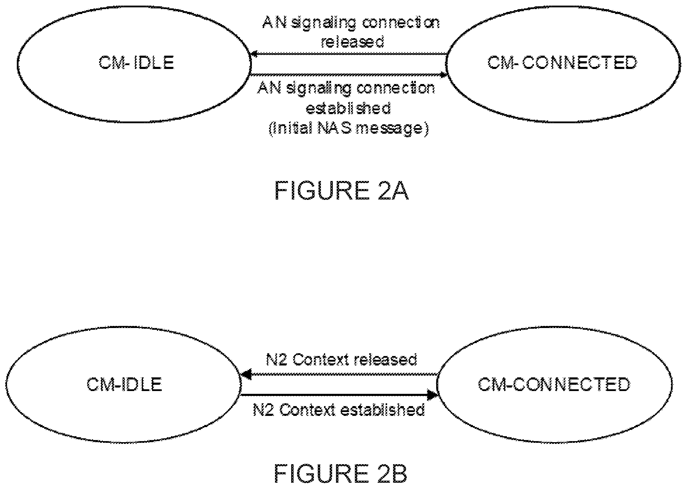

A UE in CM-CONNECTED is a UE that has established an access node (AN) signaling connection between the UE and the AN, it has entered RRC_CONNECTED state over 3GPP access. Over this connection, the UE can transmit an initial NAS message (for example a service request) and this message initiates the transition from CM-IDLE to CM CONNECTED in the AMF. As shown in FIGURE 1, CM-CONNECTED may also require an N2 connection between the access node (AN) and the AMF. The reception of initial N2 message (e.g., N2 Initial UE message) initiates the transition for AMF from CM-IDLE to CM-CONNECTED state, as shown in FIGURE 2B.

In the CM-CONNECTED state, the UE can transmit data, and it shall be ready to enter CM-IDLE, whenever AN signaling connection is released, as shown in FIGURE 2A. The AMF enters CM-IDLE whenever the logical N1 signaling connection and the N3 user plane connection are released, as shown in FIGURE 2B.

In a similar way as in the AMF, there is also a state model in the AN, the access network (not separately illustrated).

Certain embodiments in this disclosure use the term "gNB" to refer to the access network node. The term "gNB" shall be considered an example of a type of access network node, rather than a limitation in the applicability of the present disclosure. In other embodiments, other types of access network nodes could be used, such as an ng-eNB or an eNB.

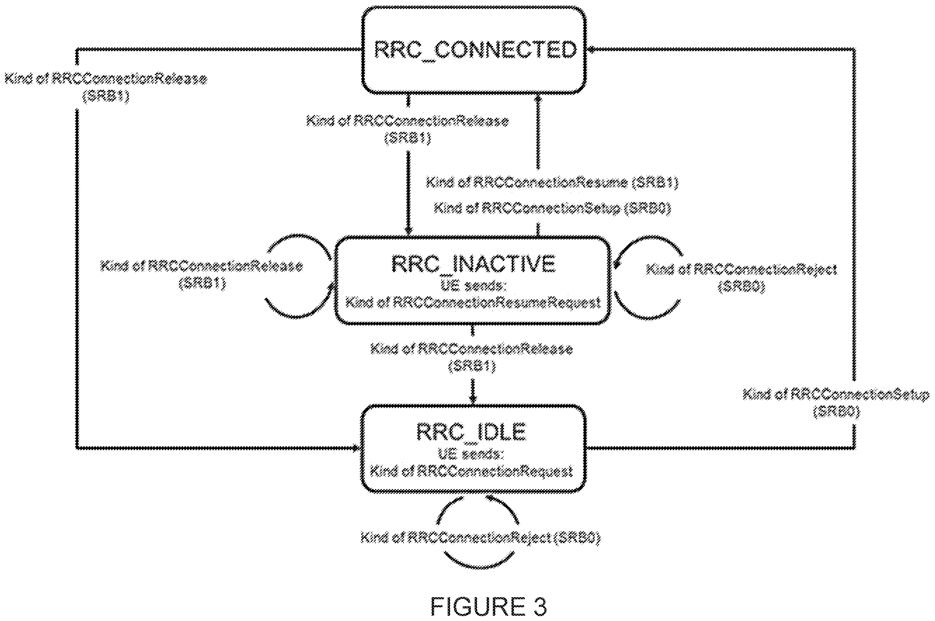

One state model in the gNB is the Radio Resource Control (RRC) State machine. FIGURE 3 illustrates the operation of an RRC State machine and the messages used to trigger/transition a UE between the states. The indications in parenthesis (SRB0, SRB1) indicate what signaling radio bearer can be used to transition the UE between the states. FIGURE 3 also shows the principles for transition, not necessarily all the messages will have the same names in the final standard.

The mapping between the different state machines, the one in the AN and the one in AMF, is such that CM-CONNECTED can map to either RRC_CONNECTED or RRC_INACTIVE - while CM-IDLE always map to RRC_IDLE.

A UE is either in RRC_CONNECTED state or in RRC_INACTIVE state when an RRC connection has been established. If this is not the case, i.e., no RRC connection is established, the UE is in RRC_IDLE state. These different states are further described in 3GPP TS 38.331

In RRC_IDLE, the UE is configured to listen to a paging channel at certain occasions and it performs cell (re)selection procedures and listens to system information.

In RRC_INACTIVE, the UE is also listening to paging channel and does cell (re)selection procedures, but in addition, it also maintains a configuration and the configuration is also kept on the network side, such that, when needed, e.g., when data arrives to the UE, it doesn't require a complete setup procedure to start transmitting data.

In RRC_CONNECTED, there is transfer of data to or from the UE and the network controls the mobility. This means that the network controls when the UE should handover to other cells. In connected state, the UE still monitors the paging channel and it monitors control channels that are associated with whether there is data for the UE or not. It provides channel quality and feedback information to the network and it performs neighboring cell measurement and reports these measurements to the network.

When a UE is in CM-CONNECTED and RRC_INACTIVE the following applies:
- UE reachability is managed by the RAN, with assistance information from core network;
- UE paging is managed by the RAN.
- UE monitors for paging with UE's CN (5G S-TMSI) and a RAN identifier (I-RNTI)

The AMF, based on network configuration, may provide assistance information to the next generation radio access network (NG-RAN), to assist the NG-RAN's decision whether the UE can be sent to RRC Inactive state.

The "RRC Inactive assistance information" can for example include:
- UE specific discontinuous receive (DRX) values.
- the Registration Area provided to the UE, sometimes referred to as TAI-list (TrackingArealdentifier List) below;
- Periodic Registration Update timer
- If the AMF has enabled mobile initiated connection only (MICO) mode for the UE, an indication that the UE is in MICO mode.
- Information from the UE permanent identifier, as defined in TS 38.304 [50], that allows the RAN to calculate the UE's RAN paging occasions.

The RRC Inactive assistance information mentioned above is provided by the AMF during N2 activation with the (new) serving NG-RAN node (i.e., during Registration, Service Request, handover) to assist the NG RAN's decision whether the UE can be sent to RRC Inactive state. RRC Inactive state is part of RRC state machine, and it is up to the RAN to determine the conditions to enter RRC Inactive state. If any of the parameters included in the RRC Inactive Assistance Information changes as the result of NAS procedure, the AMF shall update the RRC Inactive Assistance Information to the NG-RAN node.

The state of the N2 and N3 reference points are not changed by the UE entering CM-CONNECTED with RRC Inactive state. A UE in RRC inactive state is aware of the RAN Notification area (RNA).

A UE in the RRC_INACTIVE state can be configured with an RNA (RAN-based Notification Area), where:
- the RNA can cover a single cell or multiple cells, and can be smaller than CN Registration area;
- a RAN-based notification area update (RNAU) is periodically sent by the UE and is also sent when the cell reselection procedure of the UE selects a cell that does not belong to the configured RNA.

There are several different alternatives on how the RNA can be configured, including:
- List of cells:
   ∘ A UE is provided an explicit list of cells (one or more) that constitute the RNA.
- List of RAN areas:
   ∘ A UE is provided (at least one) RAN area ID, where a RAN area is a subset of a CN Tracking Area;
   ∘ A cell broadcasts (at least one) RAN area ID in the system information so that a UE knows which area the cell belongs to.
- List of TAI (Tracking Area identifiers), In CM-IDLE, it is the core network that is in charge of UE reachability and the core network does this through configuring a CN registration area that is defined by a set of Tracking Areas (TA)'s. The UE is configured with the CN registration area through a list of Tracking Area Identifiers, TAI's, and this CN Registration area is referred to as "TAI-list".

At transition into CM-CONNECTED with RRC Inactive state, the NG-RAN configures the UE with a periodic RAN Notification Area Update timer taking into account the value of the Periodic Registration Update timer value indicated in the RRC Inactive Assistance Information and uses a guard timer with a value longer than the RAN Notification Area Update timer value provided to the UE.

If the periodic RAN Notification Area Update guard timer expires in RAN, the RAN can initiate AN Release procedure as specified in TS 23.502.

When the UE is in CM-CONNECTED with RRC inactive state, the UE performs PLMN selection procedures as defined in TS 23.122 for CM-IDLE.

When the UE is CM-CONNECTED with RRC Inactive state, the UE may resume the RRC connection due to:
- Uplink data pending;
- Mobile initiated NAS signalling procedure;
- As a response to RAN paging;
- Notifying the network that it has left the RAN Notification area;
- Upon periodic RAN update timer expiration.

When Resuming, UE will include an identifier to the network that will inform the network node about where the UE context describing the specifics of the UE, e.g., bearers, Tracking area, slices, security credentials/keys etc.) such that resuming will bring the UE to an RRC_CONNECTED configuration similar to when it was resumed. The identifier pointing to the UE Context is called I-RNTI, Inactive Radio Network Temporary identifier. In connection to when the UE is suspended, i.e., it is transitioned from RRC_CONNECTED to RRC_INACTIVE, it is provided with an I-RNTI from the network. The network allocates an I-RNTI when transitioning UE to RRC_INACTIVE and the I-RNTI is used to identify the UE context, i.e., as an identifier of the details stored about the UE in the network while in RRC_INACTIVE.

Now, while the above has mainly been a description about NR, the new radio connected to a 5G core network, or a 5G system, it is equally applicable to situations when LTE connects to a 5G system. There is thus also a possibility to run LTE radio in the radio network but connecting to a system that is not an evolved packet core (EPC) system, but that includes the architecture according to above, e.g., with N2 interfaces towards AMF's.

In such situations, there will also be an RRC_INACTIVE defined, with the same specifics as is described above for NR.

Looking now more in detail on the RRC Request or RRC Connection Request procedure. In LTE it is called RRC Connection Request. In NR it is called RRC Request. These terms may be used interchangeably, and these messages may specify what access is being requested. If not specified, it will be as defined above. As is indicated by the RRC state diagram above, this procedure occurs when the UE is in RRC_IDLE.

In RRC_IDLE, before the UE has registered with a core network, it needs to send an RRC request to request a signaling connection.

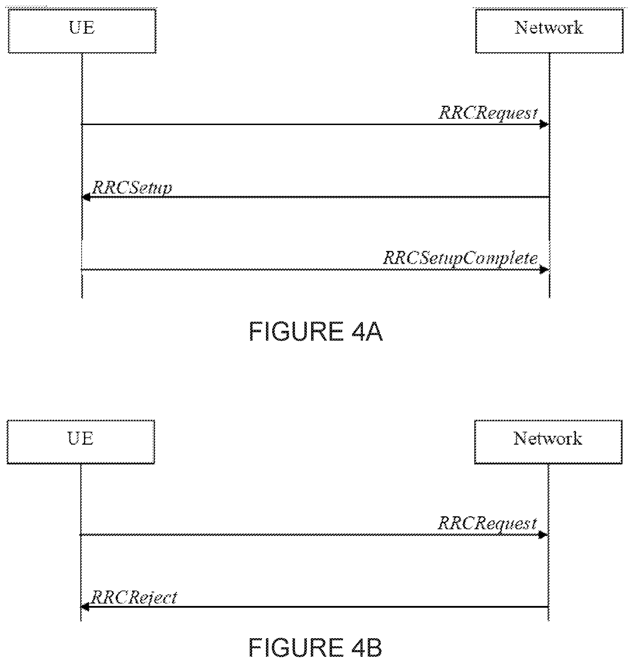

Typically, the request to the network can be either accepted or it can be rejected, as illustrated in FIGURES 4A and 4B:
FIGURE 4A illustrates a successful procedure. The first message in FIGURE 4A, the RRCRequest message, is commonly also referred to as msg3 (short for message 3) as it is the 3rd message in order (there are 2 messages not carrying any RRC, for requesting resources (msg1) to send msg3 and for receiving grants (msg2) for such resources). To continue, RRC setup is commonly referred to as msg4 and RRC Setup complete as msg5. It should be noted though that msg3 - 5 are also used as denoting interactions between UE and Network also in other procedures, like, e.g., resume procedures. Thus, msg3 and msg4-msg5 are more generic terms that may simply refer to messages in a particular order.

The purpose of this example procedure is to establish an RRC connection. RRC connection establishment involves SRB1 (Signaling Radio Bearer 1) establishment. The procedure is also used to transfer the initial NAS dedicated information/message from the UE to the network.

The network may apply the procedure as follows:
- When establishing an RRC connection:
   - to establish SRB1;
- When UE is resuming and the network is not able to retrieve or verify the UE context. This is then initiated by an RRC Resume Request rather than an RRC (Connection) Request (or RRCRequest short)

The UE initiates the procedure when upper layers request establishment of an RRC connection while the UE is in RRC_IDLE.

Upon initiation of the procedure, the UE shall, among other things, start a timer and initiate transmission of the RRCRequest message.

The UE shall set the content of the RRC message as follows:
1> set the ue-ldentity as follows:
   2> if upper layers provide a Fifth Generation System Temporary Mobile Subscriber Identity (5G-S-TMSI):
   3> set the ue-identity to the value received from upper layers;
   2> else:
   3> draw a random value of a certain range. It is the upper layers that provide the 5G-S-TMSI if the UE is registered in the tracking area of the current cell.
1> set the establishmentCause in accordance with the information received from upper layers;

The UE shall submit the RRCRequest message to lower layers for transmission.

There are of course other aspects than identifiers to consider also, but for purposes of this disclosure, some steps are omitted.

If successfully received and accepted by the network node, the UE will receive an RRC Setup message, (msg4). In response to the setup message, it shall send msg5, the complete message. In this message UE may include NAS messages to the network.

The format and content of the RRC Request message is similar in both LTE and NR Now, the message size of the RRCRequest message is limited both in NR and in LTE. In particular, in LTE, it is not possible to fit in more information than what is already specified and thus, any change to format might not be possible. Accordingly, any additional proposals that change the amount of information in the RRCRequest to require more bits presents difficulties. This may pose a particular problem when LTE is connected to 5GC, as this combination may be constrained by both the LTE air interface, and the need to add new information provided for in NR. The RRC Request message in NR is new and does not currently suffer from the constraints that LTE does.

One particular aspect that is being raised is an extension of 5G-S-TMSI code length that is being allocated by the network upper layers (Non-access Stratum) to the UE once registered.

In LTE earlier releases, when LTE only connected to EPC, the ID was instead an S-TMSI that was 40 bits in length and this was included in RRC Connection Request messages after a UE was registered.

Now, with LTE having this 40 bit constraint, any longer Identifier fields will be difficult to include in the request message.

This presents a problem if the 5G-S-TMSI, which will need to be included in the RRC Connection Request procedure in LTE when connected to 5GC, is extended to, e.g., 48 bits.

There currently exist certain challenge(s). As described above, there is a problem with using extended lengths of a temporary device identifier, such as a 5G-S-TMSI, in particular, if it is mapped to the bit-constrained msg3 / RRC connection request message in LTE. For example, in LTE, the identifier included is 40 bits and anything longer will not fit into the message 3 that includes the RRCConnectionRequest.

"Signalling aspects of network slicing", Ericsson, R2-1802635, 3GPP TSG-RANWG2 #101, 2018 proposes providing 5G-S-TMSI in MSG3 of an RRC connection establishment procedure.

"LS on 5G-S-TMSI code space", S2-182964, SA WG2 Meeting #S2-126, March 2018 proposes extending the encoding space for the 5G-S-TMSI from 40 bits to 48 bits.

### SUMMARY

Certain aspects of the present disclosure and their embodiments may provide solutions to the above-described problems or other challenges. The invention is defined by the claims appended hereto. Certain examples included in this Summary section are provided only for illustrative purposes and are regarded useful for understanding the invention.

Said examples
provide solutions for signaling of an extended 5G-S-TMSI that is longer than 40 bits. There are, proposed herein, various examples which address one or more of the issues disclosed herein. As one example, in certain examples, only part of the 5G-S-TMSI is included in msg3 (instead of including the entire 5G-S-TMSI identifier in full in msg3). The rest of the 5G-S-TMSI identifier, for which there may be no room in msg3, may instead be included in msg5. The present disclosure recognizes that the identifier allocated by upper layers, although important for upper layers, is not used in any communication towards upper layers until after reception of message 5. Translating this to an RRC Request procedure where the 5G-S-TMSI is used, the actual identifier is not needed towards upper layers until after reception of RRCRequest Complete message and thus, as disclosed herein, parts of what does not fit in msg3 may be fit into message 5 instead. Other certain solutions may be described herein in reference to examples with reference to particular illustrations and descriptions.

According to an example, a method is performed by a wireless device. The method includes transmitting, to a network node, a request message requesting the network node to grant the wireless device resources for transmitting a first message. The method further includes receiving, from the network node, a grant message granting the wireless device the resources for transmitting the first message. The method further includes determining, based at least in part on content of the grant message, whether a length of a temporary device identifier

According to an example, a method is performed by a wireless device. The method includes transmitting, to a network node, a request message requesting the network node to grant the wireless device resources for transmitting a first message. The method further includes receiving, from the network node, a grant message granting the wireless device the resources for transmitting the first message. The method further includes determining, based at least in part on content of the grant message, whether a length of a temporary device identifier of the wireless device exceeds a limit that the network node is capable of receiving in the first message. When the temporary device identifier does not exceed the limit, the method includes transmitting the first message to the network node, the first message comprising the temporary device identifier. When the temporary device identifier does exceed the limit, the method includes transmitting the first message to the network node, the first message comprising a first of the wireless device exceeds a limit that the network node is capable of receiving in the first message. When the temporary device identifier does not exceed the limit, the method includes transmitting the first message to the network node, the first message comprising the temporary device identifier. When the temporary device identifier does exceed the limit, the method includes transmitting the first message to the network node, the first message comprising a first portion of the temporary device identifier. And, the method includes transmitting a second message to the network node, the second message comprising a second portion of the temporary device identifier.

According to another example, a wireless device comprises a memory and processing circuitry. The memory is configured to store instructions. The processing circuitry is configured to execute the instructions. The wireless device is configured to transmit, to a network node, a request message requesting the network node to grant the wireless device resources for transmitting a first message. The wireless device receives, from the network node, a grant message granting the wireless device the resources for transmitting the first message. The wireless device further determines, based at least in part on content of the grant message, whether a length of a temporary device identifier of the wireless device exceeds a limit that the network node is capable of receiving in the first message. When the temporary device identifier does not exceed the limit, the wireless device transmits the first message to the network node, the first message comprising the temporary device identifier. When the temporary device identifier does exceed the limit, the wireless device transmits the first message to the network node, the first message comprising a first portion of the temporary device identifier. The wireless device also transmits a second message to the network node, the second message comprising a second portion of the temporary device identifier.

According to yet another example, a computer program product comprises a non-transitory computer readable medium storing computer readable program code. The computer readable program code comprises program code for transmitting, to a network node, a request message requesting the network node to grant the wireless device resources for transmitting a first message. The computer readable program code further comprises program code for receiving, from the network node, a grant message granting the wireless device the resources for transmitting the first message. The computer readable program code further comprises program code for determining, based at least in part on content of the grant message, whether a length of a temporary device identifier of the wireless device exceeds a limit that the network node is capable of receiving in the first message. The computer readable computer code further comprises program code for, when the temporary device identifier does not exceed the limit, transmitting the first message to the network node, the first message comprising the temporary device identifier. The computer readable computercode further comprises program code for, when the temporary device identifier does exceed the limit: transmitting the first message to the network node, the first message comprising a first portion of the temporary device identifier, and transmitting a second message to the network node, the second message comprising a second portion of the temporary device identifier.

The method/wireless device/computer program product may further include one, none, or multiple ones of the following features:
In particular examples, the first message comprises a Radio Resource Control (RRC) Setup Request.

In particular examples, the second message comprises an RRC Setup Complete message.

In particular examples, the second message is transmitted in response to receiving an RRC Setup message from the network node.

In particular examples, prior to transmitting the first message and the second message, the method/wireless device/computer program product splits the temporary device identifier into the first portion and the second portion.

In particular examples, splitting the temporary device identifier into the first portion and the second portion is based on the determination that the length of the temporary device identifier exceeds the limit.

In particular examples, the method/wirelessd device/computer program product determines, based at least in part on information received from the network node, which portion of the temporary device identifier to include in the second message.

In particular examples, the temporary device identifier is a 5G-S-TMSI.

According to an example, a method is performed by a wireless device. The method comprises transmitting a first message to a network node, the first message comprising a first portion of a 5G-S-TMSI. The method further comprises transmitting a second message to the network node, the second message comprising a second portion of the 5G-S-TMSI.

According to another example, a wireless device comprises a memory and processing circuitry. The memory is configured to store instructions. The processing circuitry is configured to execute the instructions. The wireless device is configured to transmit a first message to a network node, the first message comprising a first portion of a 5G-S-TMSI. The wireless device is further configured to transmit a second message to the network node, the second message comprising a second portion of the 5G-S-TMSI.

According to yet another example, a computer program product comprises a non-transitory computer readable medium storing computer readable program code. The computer readable program code comprises program code for transmitting a first message to a network node, the first message comprising a first portion of a 5G-S-TMSI. The computer readable program code further comprises program code for transmitting a second message to the network node, the second message comprising a second portion of the 5G-S-TMSI.

The method/wireless device/computer program product may further include one, none, or multiple ones of the following features:
In particular examples, the first message comprises an RRC request.

In particular examples, the second message comprises an RRC setup complete message.

In particular examples, the second message is transmitted in response to receiving an RRC setup message from the network node.

In particular examples, prior to transmitting the first message and the second message, the method/wireless device/computer program product transmits, to the network node, a request message requesting the network node to grant the wireless device resources for transmitting the first message. The method/wireless device/computer program product receives, from the network node, a grant message granting the wireless device the resources for transmitting the first message.

In particular examples, prior to transmitting the first message and the second message, the method/wireless device/computer program product splits the 5G-S-TMSI into the first portion and the second portion.

In particular examples, splitting the 5G-S-TMSI into the first portion and the second portion is based on a determination that the length of the 5G-S-TMSI exceeds a limit that the network node is capable of receiving in the first message.

In particular examples, the method/wireless device/computer program product determines, based at least in part on information received from the network node, which portion of the 5G-S-TMSI to include in the second message.

According to certain examples, a method is performed by a network node. The method comprises receiving a first message from a wireless device, the first message comprising a first portion of a 5G-S-TMSI. The method further comprises receiving a second message from the wireless device, the second message comprising a second portion of the 5G-S-TMSI. The method further comprises obtaining the 5G-S-TMSI by reassembling the first portion of the 5G-S-TMSI and the second portion of the 5G-TMSI received from the wireless device.

According to another example, a network node comprises a memory and processing circuitry. The memory is configured to store instructions. The processing circuitry is configured to execute the instructions. The network node is configured to receive a first message from a wireless device, the first message comprising a first portion of a 5G-S-TMSI. The network node is further configured to receive a second message from the wireless device, the second message comprising a second portion of the 5G-S-TMSI. The network node is further configured to obtain the 5G-S-TMSI by reassembling the first portion of the 5G-S-TMSI and the second portion of the 5G-TMSI received from the wireless device.

According to yet another example, a computer program product comprises a non-transitory computer readable medium storing computer readable program code. The computer readable program code comprises program code for receiving a first message from a wireless device, the first message comprising a first portion of a 5G-S-TMSI. The computer readable program code further comprises program code for receiving a second message from the wireless device, the second message comprising a second portion of the 5G-S-TMSI. The computer readable program code further comprises program code for obtaining the 5G-S-TMSI by reassembling the first portion of the 5G-S-TMSI and the second portion of the 5G-TMSI received from the wireless device.

The method/network node/computer program product may further include one, none, or multiple ones of the following features:
In particular examples, a size of the obtained 5G-S-TMSI exceeds a limit that the network node is capable of receiving in the first message.

In particular examples, the first message comprises a Radio Resource Control (RRC) request.

In particular examples, the second message comprises an RRC setup complete message.

In particular examples, the method/network node/computer program product transmits an RRC setup message to the wireless device in response to receiving the first message.

In particular examples, prior to receiving the first message and the second message, the method/network node/computer program product receives, from the wireless device, a request message requesting the network node to grant the wireless device resources for transmitting the first message. The method/network node/computer program product transmits, to the wireless device, a grant message granting the wireless device the resources for transmitting the first message.

In particular examples, the method/network node/computer program product transmit, to the wireless device, information indicating which bits of the 5G-S-TM-SI to include in the first portion or the second portion.

In particular examples, the method/network node/computer program product transmit, to the wireless device, an indicator that indicates a length of the first portion of the 5G-S-TMSI that the network node is capable of receiving in the first message.

In particular examples, the method/network node/computer program product use the 5G-S-TMSI to identify the wireless device in a subsequent message.

Certain examples of the present disclosure may provide one or more technical advantages. For example, certain examples allow a wireless device to transmit a first portion of the 5G-S-TMSI in a first message (e.g., msg3) and a second portion of the 5G-S-TMSI in a second message (e.g., msg5 or later transmission). This may enable the wireless device to use a longer 5G-S-TMSI to identify the wireless device while still transmitting a portion of the identifier in an early message. As another example, certain examples provide a wireless device to adaptively send the identifier either in one message or split over two messages based on a size of the identifier (e.g., if the identifier exceeds a limit that the network node is capable of receiving in the first message, it may be split over the first message and the second message). As yet another example, a network node may receive two portions of the identifier and obtain the complete identifier by reassembling the portions of the identifier. In this manner, the wireless device and network node may implement a usable longer-length identifier for new radio that addresses one or more of the various problems discussed above.

Certain examples may have none, some, or all of the above-recited advantages. Other advantages may be readily apparent to one having skill in the art.

### BRIEF DESCRIPTION OF THE DRAWINGS

For a more complete understanding of the disclosed embodiments and their features and advantages, reference is now made to the following description, taking in conjunction with the accompanying drawings, in which:
FIGURE 1 illustrates an example of a 5G system architecture, in accordance with certain embodiments.
FIGURES 2A and 2B illustrate state transition states for a user equipment, in accordance with certain embodiments;
FIGURE 3 illustrates a state model for transitions of states in a user equipment, in accordance with certain embodiments;
FIGURES 4A and 4B illustrate signalling diagrams between a user equipment and a network in response to an RRCRequest message, in accordance with certain embodiments;
FIGURE 5 is an example 5G-enabled wireless network, in accordance with certain embodiments;
FIGURE 6 is an example method for transmitting a temporary identifier, in accordance with certain embodiments;
FIGURE 7 is another example method for transmitting a temporary identifier, in accordance with a non-claimed example;
FIGURE 8 illustrates an example wireless network, in accordance with certain embodiments;
FIGURE 9 illustrates an example user equipment, in accordance with certain embodiments;
FIGURE 10 illustrates an example virtualization environment, in accordance with certain embodiments;
FIGURE 11 illustrate an example telecommunication network connected via an intermediate network to a host computer, in accordance with certain embodiments;
FIGURE 12 illustrates an example host computer communicating via a base station with a user equipment over a partially wireless connection, in accordance with certain embodiments;
FIGURE 13 is a flowchart illustrating an example method implemented in a communication system, in accordance certain embodiments;
FIGURE 14 is a flowchart illustrating a second example method implemented in a communication system, in accordance with certain embodiments;
FIGURE 15 is a flowchart illustrating a third method implemented in a communication system, in accordance with certain embodiments;
FIGURE 16 is a flowchart illustrating a fourth method implemented in a communication system, in accordance with certain embodiments;
FIGURE 17 illustrates an example method performed by a wireless device, in accordance with certain embodiments and in accordance with the non-claimed example;
FIGURE 18 illustrates a schematic block diagram of a first example apparatus in a wireless network, in accordance with certain embodiments;
FIGURE 19 illustrates a second example method performed by a wireless device, in accordance with certain embodiments;
FIGURE 20 illustrates a third example method performed by a wireless device, in accordance with certain embodiments; and
FIGURE 21 illustrates an example method performed by a network node, in accordance with certain embodiments.

### DETAILED DESCRIPTION

Some of the embodiments contemplated herein will now be described more fully with reference to the accompanying drawings. Other embodiments, however, are contained within the scope of the subject matter disclosed herein. The disclosed subject matter should not be construed as limited to only the embodiments set forth herein. Rather, these embodiments are provided by way of example to convey the scope of the subject matter to those skilled in the art. Additional information may also be found in the document(s) provided in the Appendix.

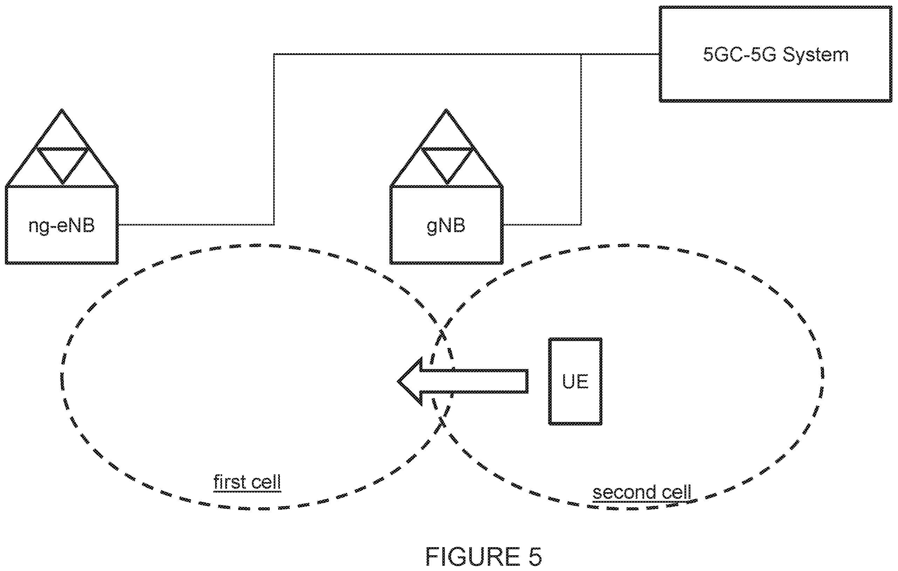

FIGURE 5 illustrates two different cells, the first cell and the second cell served by two nodes, ng-eNB and gNB, respectively. Both nodes may be connected to a 5GC-5G System. The ng-eNB node may offer access through LTE air interface and the gNB node may offer access through NR air interface. The radio spectrum used in the first cell and the second cell may be the same or different. Further, the spectrum bands may be the same or different. For example, the first cell may utilize bands in the 2GHz spectrum regime whereas the second cell may offer access through spectrum in other bands, like the 3.5, 5, 6, 28 or 60 GHz band.

A wireless device (UE) is shown in FIGURE 5 as moving from the first cell to the second cell. Dependent on what state the UE is in, different things will happen when UE enters the first cell. The present disclosure describes certain states when the UE is allocated a 5G-S-TMSI.

When a UE has performed an initial RRCConnectionRequest successfully and managed to register with the 5G System, whether through accessing via a gNB (NR) or accessing via an ng-eNB (LTE) it will be allocated a 5G-S-TMSI.

The intention is that this 5G-S-TMSI will be used to identify a UE when communicating with the network.

In certain embodiments, accessing through an ng-eNB only allows a 40 bit identifier. If the 5G-S-TMSI allocated to the UE is larger than 40 bits, the UE may, according to certain embodiments, do the following: The UE may include parts of the 5G-S-TMSI in the initial message to access the ng-eNBwith the RRC Connection Request message to be sent from the UE to the ng-eNB. For example, the RRC Connection Request may include 40 bits of the identifier, the same as the limit of the number of bits allowed for the identifier. In some embodiments, the exact number of bits may be less than the limit of the number of bits. In some embodiments, the exact bits to include may be either agreed between the UE and the network node, or it may be standardized that splitting a 5G-S-TMSI is done using a certain method, e.g., by including the most significant bits or the least significant bits in msg3.

The UE may then include the remaining bits in subsequent message 5 that is transmitted from the UE to the network after reception of a setup message in message 4.

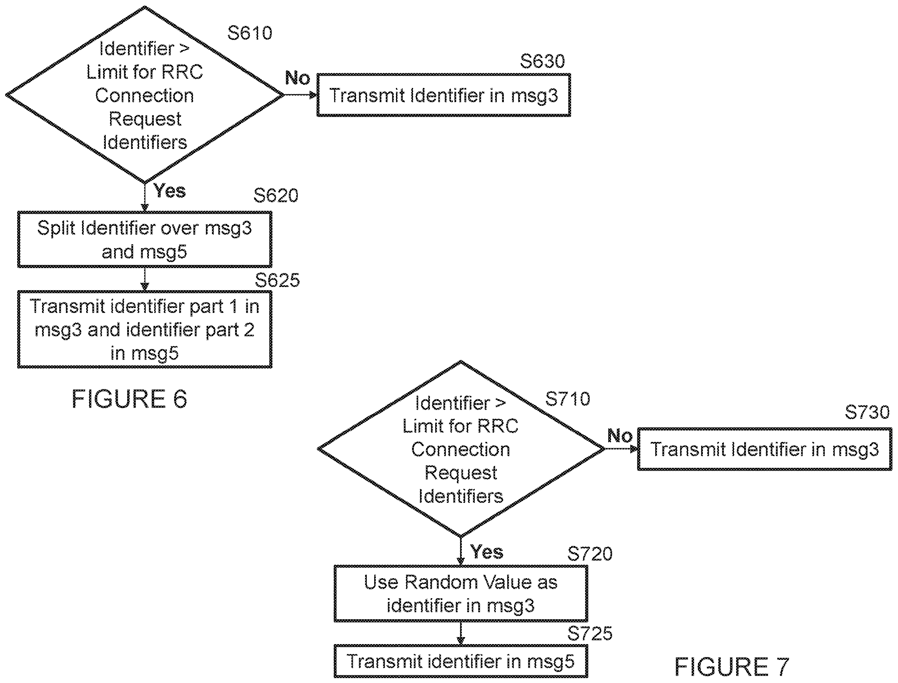

FIGURE 6 illustrates an example procedure by a user equipment. In step S610 there is a check in the UE prior to sending an RRCConnectionRequest message, e.g., in LTE connected to 5GC, if the identifier (in the example, the 5G-S-TMSI) is larger than the limit. If the 5G-S-TMSI is larger than the limit, then it should be split into smaller parts (S620). For example, the 5G-S-TMSI may be split into two parts. In the next step, the UE transmits two parts, one in msg3 and one in msg5 (S625). In some embodiments, msg3 may correspond to a request message (e.g., RRCConnectionRequest), and msg5 may correspond to a completion message (e.g., RRCSetupComplete). If at step 610 it had been determined that the identifier (e.g., 5G-S-TMSI) was not larger than the limit, the method would have proceeded to step 630 where the full identifier would be transmitted in msg3.

In case it is a split identifier there may also be inserted an indication about this in msg5 (if there are options). Alternatively, it may be that request message includes an indication that it is a split identifier.

On the network node, the 5G-S-TMSI may be re-assembled and used/included in communication towards the network to identify communication from the particular UE.

According to another aspect of the present disclosure, and as illustrated in FIGURE 7, the UE may instead select to include the complete identifier received from upper layers, by the network in message 5 when performing the procedure of RRC Connection Request-Setup and Complete.

According to this non-claimed example of the present disclosure, if it is determined that the size of the 5G-S-TMSI is too large (S710), the complete 5G-S-TMSI may be included in message 5 instead of in message 3. In such situations, it is necessary to include another identifier in message 3 for purposes of returning an identifier in message 4 to make sure handshake is done with the correct UE. This other identifier is, prior to registration and reception of a 5G-S-TMSI, specified to be a random value (S720). One aspect of the present disclosure is thus to use the random value approach not only when the UE is not registered and has not received a 5G-S-TMSI, but also in situations when it already has an 5G-S-TMSI. Accordingly, in this non-claimed example, the random value may be transmitted in msg3 (S720) and the full identifier transmitted in msg5 (S725). Akin to the other methods, if at S710 the size of the identifier is smaller than the limit, the full identifier may be transmitted in msg3 (S730).

As demonstrated in FIGURES 6-7, certain embodiments and the non-claimed example allow the UE to manage a large upper layer identifier even if there are bit constraints to sending the identifier in a particular message (e.g., even a bit-constrained message 3 like the RRC Connection Request message in LTE, can manage a large upper layer identifier). Thus, a technical advantage of certain embodiments and of the non-claimed example allows both NR and LTE connected to 5GS and a 5G core network to manage a longer 5G-S-TMSI, for example 48 bits.

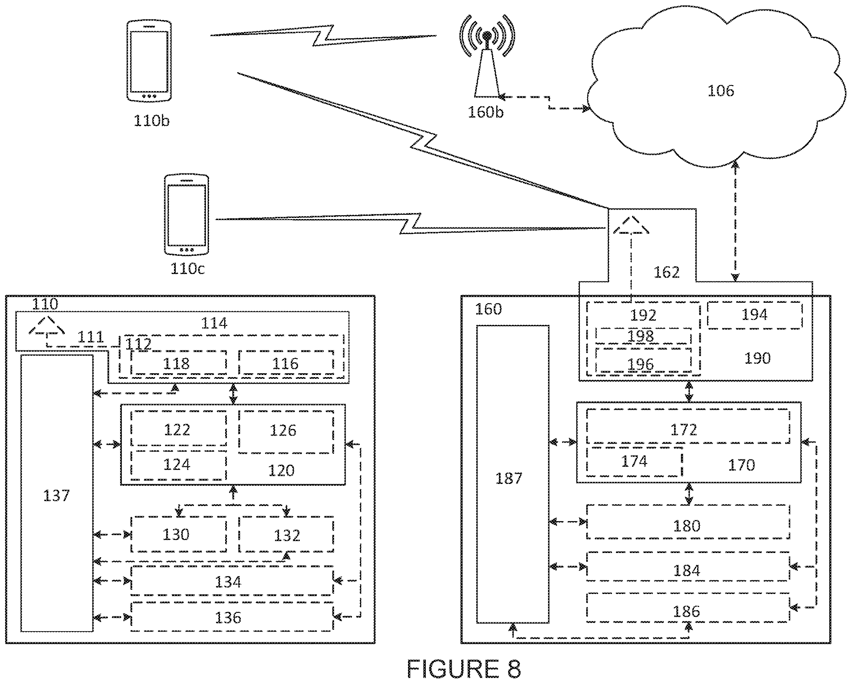

Although the subject matter described herein may be implemented in any appropriate type of system using any suitable components, the embodiments disclosed herein are described in relation to a wireless network, such as the example wireless network illustrated in FIGURE 8. For simplicity, the wireless network of FIGURE 8 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Waveand/or Zig-Bee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/orMDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 8, network node 160 includes processing circuitry 170, device readable medium 180, interface 190, auxiliary equipment 184, power source 186, power circuitry 187, and antenna 162. Although network node 160 illustrated in the example wireless network of FIGURE 8 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., aNodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/orcomputer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signalling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, orantenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Othertypesof power sources, such as photovoltaic devices, may also be used.

Alternative embodiments of network node 160 may include additional components beyond those shown in FIGURE 8 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptopmounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such asan external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

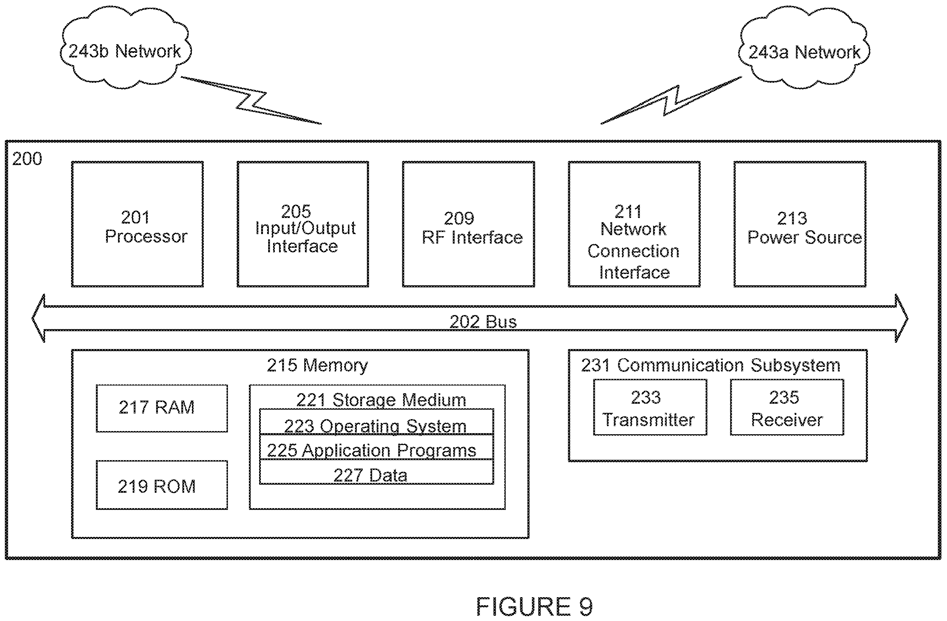

FIGURE 9 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 2200 may be any UE identified by the 3^{rd} Generation Partnership Project (3GPP), including a NB-loT UE, a machine type communication (MTC) UE, and/or an enhanced MTC (eMTC) UE. UE 200, as illustrated in FIGURE 9, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 9 is a UE, the components discussed herein are equally applicable to a WD, and vice-versa.

In FIGURE 9, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in FIGURE 9, or only a subset of the components. The level of integration between the components may vary from one UE to another UE. Further, certain UEs may contain multiple instances of a component, such as multiple processors, memories, transceivers, transmitters, receivers, etc.

In FIGURE 9, processing circuitry 201 may be configured to process computer instructions and data. Processing circuitry 201 may be configured to implement any sequential state machine operative to execute machine instructions stored as machine-readable computer programs in the memory, such as one or more hardwareimplemented state machines (e.g., in discrete logic, FP-GA, ASIC, etc.); programmable logic together with appropriate firmware; one or more stored program, generalpurpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, aweb camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 9, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such asa subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 9, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/orwireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

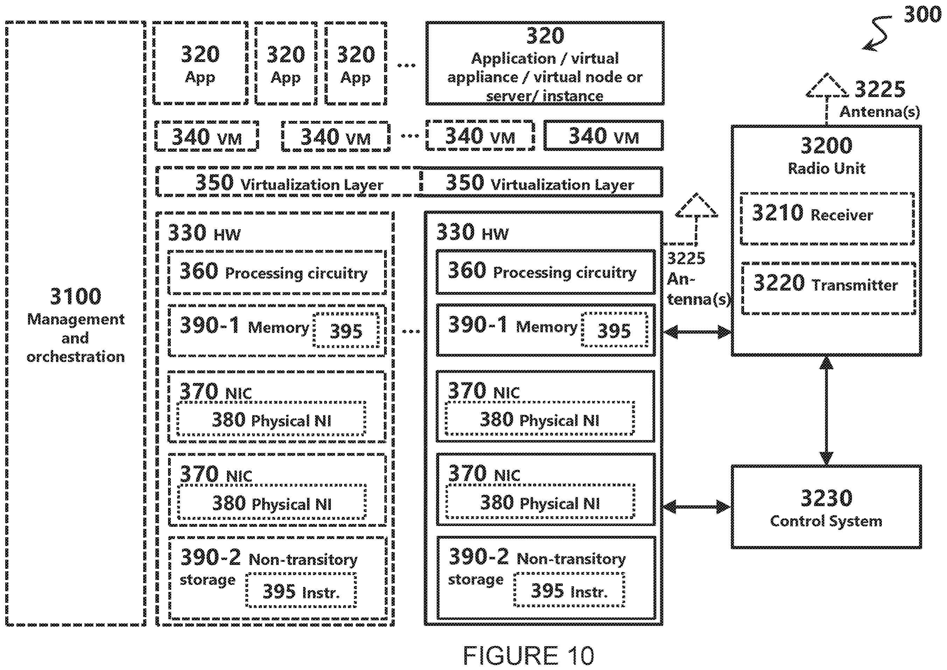

FIGURE 10 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 10, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 10.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

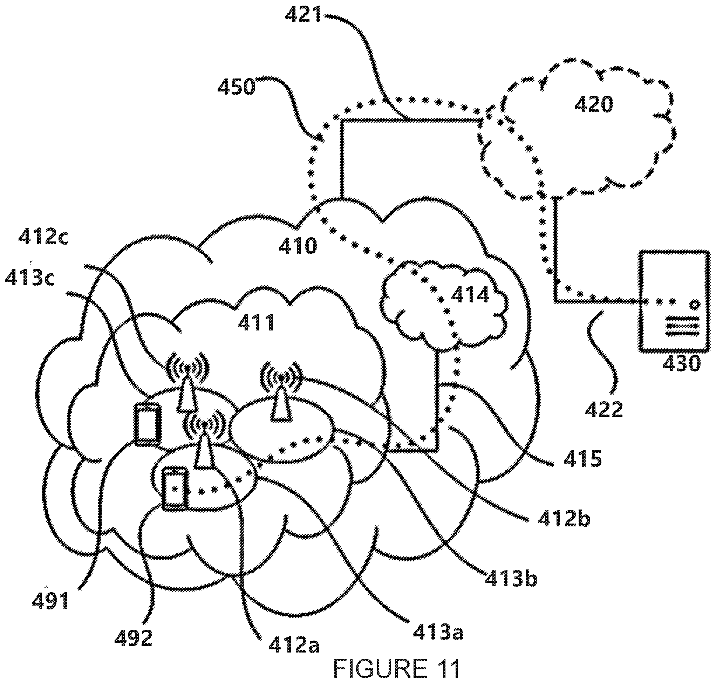

With reference to FIGURE 11, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE492 in coverage area 413a is wirelesslyconnectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 11 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer430 to be forwarded (e.g., handed over) to a connected UE 491. Similarly, base station 412 need not be aware of the future routing of an outgoing uplink communication originating from the UE 491 towards the host computer 430.

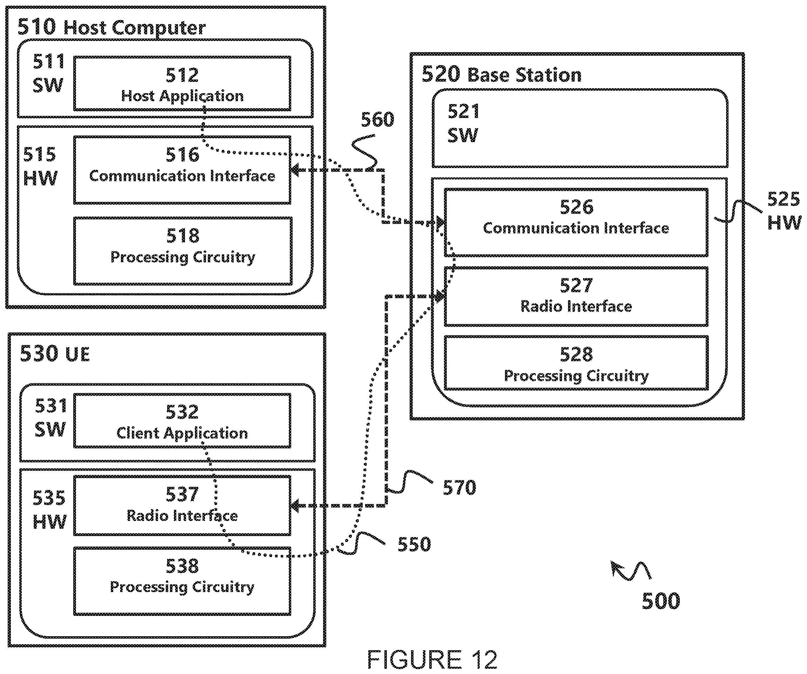

Example implementations, in accordance with an embodiment, of the UE, base station and host computer discussed in the preceding paragraphs will now be described with reference to FIGURE 12. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 12) served by base station 520. Communication interface 526 may be configured to facilitate connection 560 to host computer 510. Connection 560 may be direct or it may pass through a core network (not shown in FIGURE 12) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 12 may be similar or identical to host computer 430, one of base stations 412a, 412b, 412c and one of UEs 491, 492 of FIGURE 11, respectively. This is to say, the inner workings of these entities may be as shown in FIGURE 12 and independently, the surrounding network topology may be that of FIGURE 11.

In FIGURE 12, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve latency and thereby provide benefits such as reduced user waiting time and better responsiveness.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

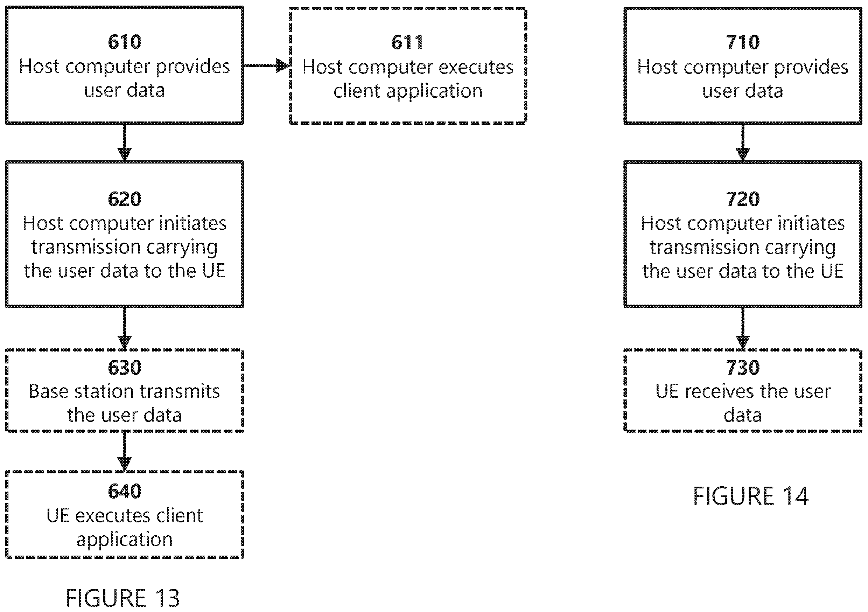

FIGURE 13 is a flowchart illustrating a method implemented in a communication system, in accordance with one embodiment. The communication system includes a host computer, a base station and a UE which may be those described with reference to FIGURES 11 and 12. For simplicity of the present disclosure, only drawing references to FIGURE 13 will be included in this section. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 14 is a flowchart illustrating a method implemented in a communication system, in accordance with one embodiment. The communication system includes a host computer, a base station and a UE which may be those described with reference to FIGURES 11 and 12. For simplicity of the present disclosure, only drawing references to FIGURE 14 will be included in this section. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

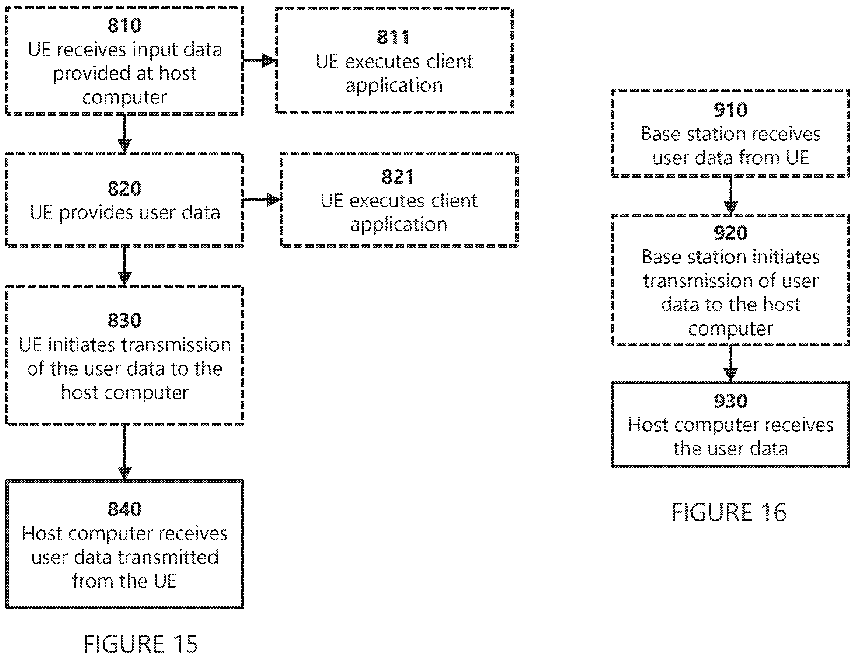

FIGURE 15 is a flowchart illustrating a method implemented in a communication system, in accordance with one embodiment. The communication system includes a host computer, a base station and a UE which may be those described with reference to FIGURES 11 and 12. For simplicity of the present disclosure, only drawing references to FIGURE 15 will be included in this section. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 16 is a flowchart illustrating a method implemented in a communication system, in accordance with one embodiment. The communication system includes a host computer, a base station and a UE which may be those described with reference to FIGURES 11 and 12. For simplicity of the present disclosure, only drawing references to FIGURE 16 will be included in this section. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

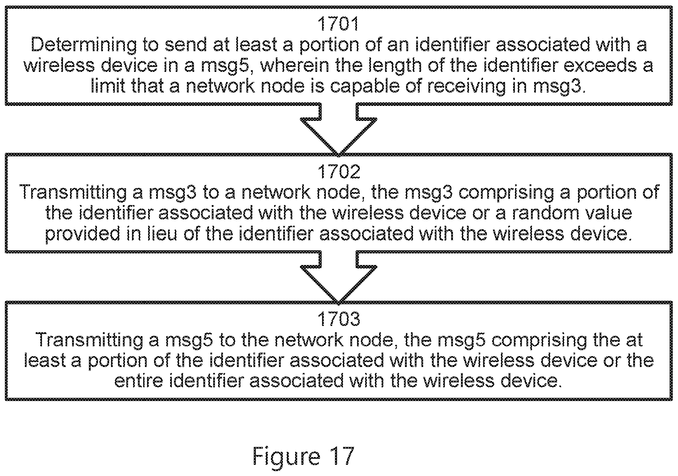

FIGURE 17 depicts a method in accordance with particular embodiments and in accordance with the non-claimed example, comprises determining to send at least a portion of an identifier associated with a wireless device in a msg5, wherein the length of the identifier exceeds a limit that a network node is capable of receiving in msg3 (step 1701); transmitting a msg3 to a network node, the msg3 comprising a portion of the identifier associated with the wireless device (step 1702). According to the non-claimed example the msg3 comprising a random value provided in lieu of the identifier associated with the wireless device (step 1702); and transmitting a msg5 to the network node, the msg5 comprising the at least a portion of the identifier associated with the wireless device. According to the non-claimed example the msg5 comprising the entire identifier associated with the wireless device (step 1703).

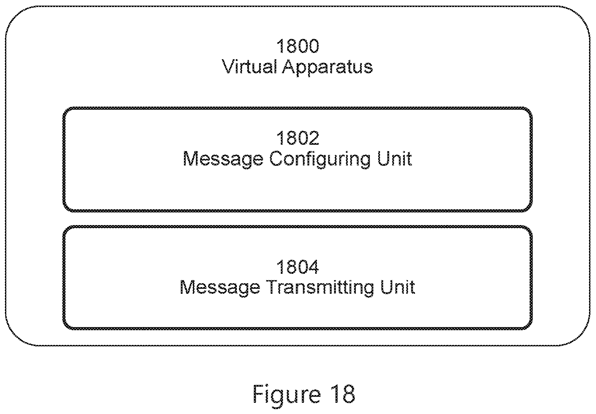

FIGURE 18 illustrates a schematic block diagram of an apparatus 1800 in a wireless network (for example, the wireless network shown in FIGURE 8). The apparatus may be implemented in a wireless device or network node (e.g., wireless device 110 or network node 160 shown in FIGURE 8). Apparatus 1800 is operable to carry out the example method described with reference to FIGURE 17 and possibly any other processes or methods disclosed herein. It is also to be understood that the method of FIGURE 17 is not necessarily carried out solely by apparatus 1800. At least some operations of the method can be performed by one or more other entities.

Virtual Apparatus WW00 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause Message Configuring unit 1802, Message Transmitting unit 1804, and any other suitable units of apparatus 1800 to perform corresponding functions according one or more embodiments of the present disclosure.

As illustrated in FIGURE 18, apparatus 1800 includes Message Configuring Unit 1802 and Message Transmitting unit 1804. Message Configuring unit 1802 is configured to configure msg3 and msg5. For example, if an identifier associated with a wireless device (e.g., 5G-S-TMSI) exceeds a limit (e.g., more than 40 bits), Message Configuration unit 1802 configures msg5 to include at least a portion of the identifier. In one embodiment, Message Configuration unit 1802 splits the identifier between msg3 and msg5. How to split the identifier (e.g., how many bits of the identifier to configure in msg3, how many bits of the identifier to configure in msg5, and which of msg3 or msg5 is to include the most significant bits) may be pre-defined (e.g., based on rules stored in memory) or determined based on signalling exchanged with a network node. Message Transmitting unit 1804 receives msg3 and msg5 from Message Configuration unit 1802 and transmits msg3 and msg5 to a network node, for example, according to a procedure to establish or resume an RRC connection. The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In some embodiments a computer program, computer program product or computer readable storage medium comprises instructions which when executed on a computer perform any of the embodiments disclosed herein. In further examples the instructions are carried on a signal or carrier and which are executable on a computer wherein when executed perform any of the embodiments disclosed herein.

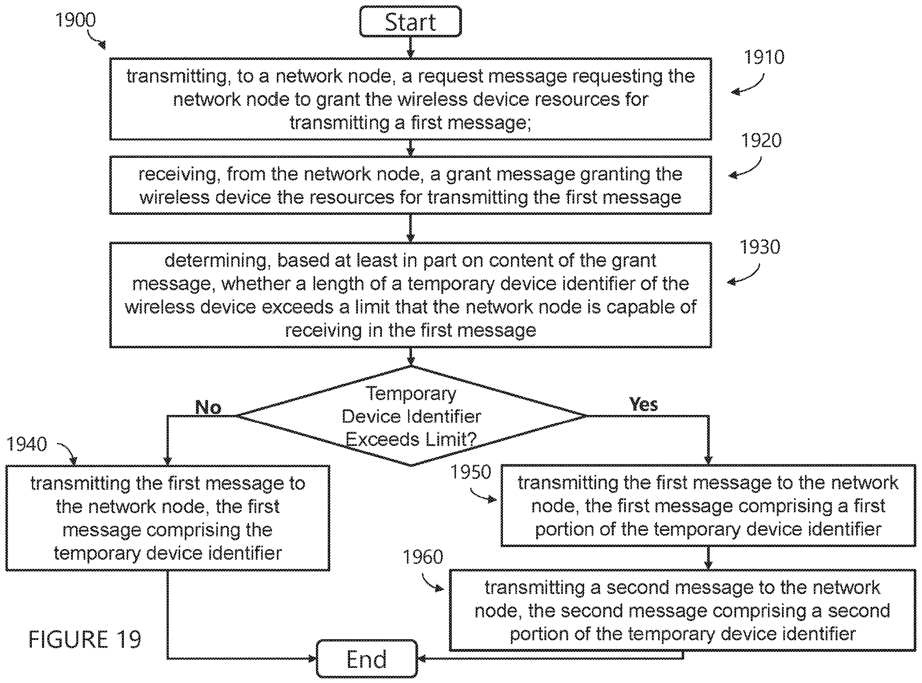

FIGURE 19 illustrates an example of another method 1900 for use in wireless device. Method 1900 may begin at step 1910 with transmitting a request message to a network node. As an example, the request message may correspond to msg1. The request message requests the network node to grant the wireless device resources for transmitting a first message. In general, the first message provides the wireless device with the option of transmitting at least a portion of a temporary device identifier, such as a 5G-S-TMSI. The first message need not necessarily occur first in a sequence of messages. Forexample, in certain embodiments, the first message may correspond to a msg3, such as an RRC Setup Request transmitted subsequent to msg1.

At step 1920, a grant message granting the wireless device the resources for transmitting the first message may be received from the network node. For example, a msg2 granting resources to the wireless device may be received from the network node to which the wireless device sent the request for resources in step 1910.

At step 1930, the wireless device may determine whether a length of a temporary device identifier being transmitted by the wireless device exceeds a limit that the network node is capable of receiving in a subsequent message. As an example, suppose the wireless device determines that the network node is capable of receiving temporary device identifiers of up to 40 bits in an RRC Request message (e.g., msg3). If the temporary device identifier being transmitted by the wireless device is greater than 40 bits, e.g., a 48-bit 5G-S-TMSI, then the method may determine that the limit is exceeded and proceed to step 1950. On the hand, if the temporary device identifier being transmitted by the wireless device is less than or equal to 40 bits (i.e., the limit that the network node is capable of receiving in this example), then the method may proceed to step 1940.

At step 1940, when it is determined that the temporary device identifier does not exceed the limit, the first message may be transmitted to the network node containing the temporary device identifier. For example, the wireless device may send the RRC Request message in msg3, which may contain the entire temporary device identifier, e.g., because it will fit.

If at step 1930 the limit is exceeded, method 1900 may take the other branch beginning with step 1950. At step 1950, the first message is transmitted to the network node, wherein the first message includes a first portion of the temporary device identifier. At step 1960, a second message is transmitted to the network node, and the second message includes a second portion of the temporary device identifier. In certain embodiments, the first message in step 1950 is RRC Request message and the second message in step 1960 is an RRC Setup Complete message. The second message may be sent by the wireless device in response to receiving an RRC Setup message from the network node in response to the RRC Request message.

In certain embodiments, before transmitting the first message, the wireless device may split the temporary device identifier into the first portion and the second portion. This may be done based on predetermined arrangement or understanding or setting provided between the wireless device and network or based on a standard or indicated during the communications between the wireless device and network node so that the portions may be obtained and reassembled. As an example, in certain embodiments, the temporary device identifier may be split based on receiving information from the network node that indicates which portion of the temporary device identifier to include in the first message or the second message (e.g., the network node may indicate a number of bits to include in the first message, a number of bits to include in the second message, which message should include the most significant bits, and/or which message should include the least significant bits). In some embodiments, the wireless device only splits the temporary device identifier if it is determined that the length of the temporary device identifier exceeds the limit that the network node is capable of receiving in the first message.

Accordingly, FIGURE 19 illustrates an example method whereby a wireless device, e.g., wireless devices 110, 200, 330, 491, 492, 530, may handle an identifier that may exceed limits at the network node, e.g., an LTE eNB, without using a truncated version of the identifier or causing delay in setting up connection between the wireless device and network node. By permitting the wireless device to split the temporary device identifier, the wireless device may transmit the complete temporary device identifier, even if it exceeds the limits for transmitting in msg3, before higher level applications use the temporary device identifier.

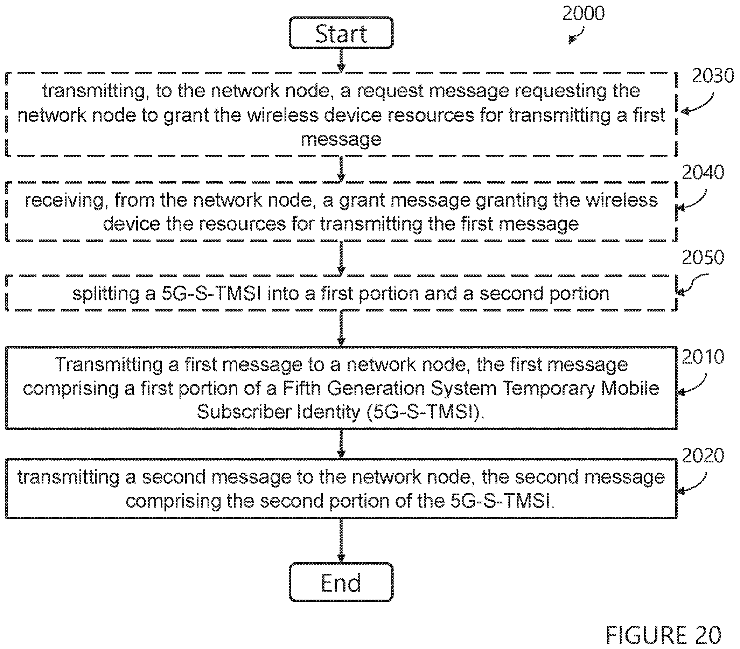

FIGURE 20 illustrates an example of another method 2000 for use in a wireless device. At step 2010, a first message is transmitted to a network node. The first message, may include a first portion of a 5G-S-TMSI. For example, a wireless device (e.g., wireless device 110) may transmit a portion less than all of the 5G-S-TMSI in a msg3 RRC connection request to a candidate network node, e.g., network node 160.

The other portion of the 5G-S-TMSI may be transmitted in a later message. For example, at step 2020, a second message is transmitted to the network node. The second message includes a second portion of the 5G-S-TMSI. In certain embodiments, the first and second portions of the 5G-S-TMSI may include all bits of the identifier, such that a network node may reconstruct the whole identifier using the first and second portions transmitted in the first and second messages, respectively. In some embodiments, the first message is a msg3 RRC connection request and the second message is a msg5 RRC setup complete message. In this manner, the wireless device may communicate the full identifier to the network node even if the identifier exceeds a limit that the network node is capable of receiving in the first message.

In certain embodiments, method 2000 may include one or more optional steps. In one set of embodiments, method 2000 may further include optional steps 2030 and 2040, which may precede steps 2010 and 2020. At step 2030, a request message requesting the network node to grant the wireless device resources for transmitting the first message is transmitted by the wireless device. At step 2040, the wireless device may receive, from the network node, a grant message granting the wireless device the resources for transmitting the first message. Accordingly, these steps may set up the situation wherein the wireless device may transmit its temporary device identifier. For example, the request message may be a msg1 requesting resources and the grant message may be a msg2 granting the resources on which RRC information may be transmitted.

In another set of embodiments, the method may further include splitting the 5G-S-TMSI into the first portion and the second portion (step 2050). For example, the wireless device may determine or may be instructed to split the 5G-S-TMSI. This may be a result of the 5G-S-TMSI exceeding the limits of the network node (e.g., an eNB that can only accept up to 40 bits for an identifier in a msg3 request) or may be implemented for another reason. In some embodiments, the wireless device may independently determine whether the 5G-S-TMSI exceeds a predetermined limit for the network node that the wireless device is attempting to connect with. The wireless device may then split the 5G-S-TMSI in a suitable manner. For example, it may split the 5G-S-TMSI evenly into two portions. Or, it may split the 5G-S-TMSI such that the first portion includes the maximum number of bits allowed and the second portion contains the remainder. As yet another example, certain specified bits may be included in the first portion, e.g., the most significant bits or the least significant bits, and the remainder in the second portion. As a result, the wireless device may transmit the 5G-S-TMSI over two messages, which may accommodate larger sizes of the identifier across diverse systems implemented in new radio and LTE.

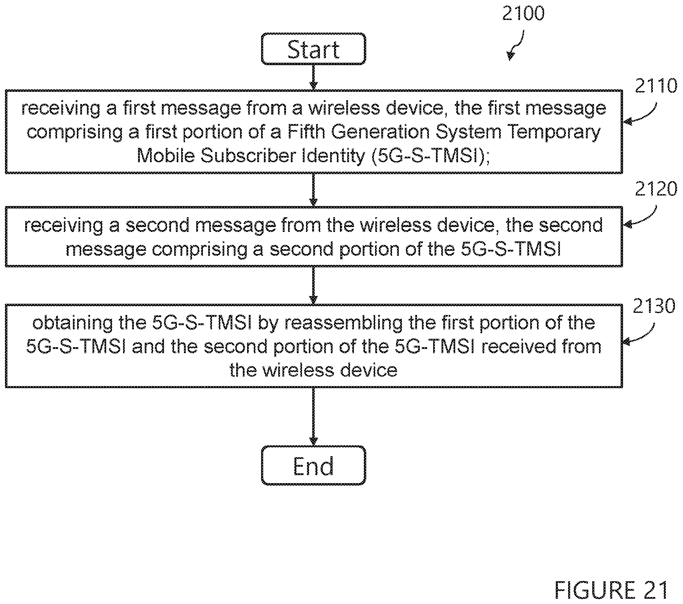

FIGURE 21 illustrates a method 2100 for use in a network node. For example, method 2100 may be implemented in a suitable network node, e.g., network node 160, serving a wireless device, such as wireless device 110. Method 2100may begin at step 2110, wherein a first message is received from a wireless device. The first message includes a first portion of a 5G-S-TMSI associated with the wireless device. The network node may infer that this is only a first portion of the 5G-S-TMSI by a suitable method, such as receiving an indication from the wireless device, receiving information from the network providing an indication that the identifier may exceed the network node's limits, or through a determination at the network node that the identifier is not complete. The first portion may be received in an early message such as msg3, e.g., with an RRC connection request.

At step 2120, a second message is received including a second portion of the 5G-S-TMSI. For example, the wireless device may transmit another portion of the 5G-S-TMSI in a subsequent message, such as msg5 transmitting an RRC setup complete message in response to an RRC setup message sent by the network node. In some embodiments, the first and second portions received by the network node include all bits of the 5G-S-TMSI. In certain embodiments, the size of the 5G-S-TMSI exceeds a limit that the network node is capable of receiving in the first message, thus requiring it to be received in two messages.

At step 2130, the network node may obtain the 5G-S-TMSI by reassembling the first and second portions received in the messages from the wireless device. For example, the network node may be signalled how to combine the first and second portions to obtain the complete 5G-S-TMSI. As another example, the network node may operate according to a standard to reassemble the 5G-S-TMSI.

In certain embodiments, the network node transmits information to the wireless device indicating which bits of the 5G-S-TMSI to include in the first portion or the second portion. For example, this information may be part of higher-level signalling or configuration information that is broadcast in the cells or areas covered by the network. In certain embodiments, this may be part of a configuration setup targeted to wireless device, e.g., before msg3 is sent. In certain embodiments, the network node transmits explicitly an indicator that indicates a length of the first portion of the 5G-S-TMSI that the network node is capable of receiving in the first message. In these various manners, the network node may enable the wireless device to determine whether to split the 5G-S-TMSI for transmission to the network node.

As a result, method 2100 may provide a method for receiving a 5G-S-TMSI over two subsequent messages and obtain the complete 5G-S-TMSI. The 5G-S-TMSI may be further used by the network node to identify the wireless device in any subsequent messages or signalling. Accordingly, even if the size of the 5G-S-TMSI exceeds the size the network node is capable of receiving in msg3, a larger 5G-S-TMSI may be accommodated without undue delay in signalling in the network.

In certain embodiments, methods 1900, 2000, and 2100 may contain additional, fewer, or different steps. Additionally, the methods described herein may be implemented on one or more components of network 106, such as network node 160 and wireless device 110 or any other components described herein using FIGURES 8-12. While certain components may have been used in describing certain steps of methods 1900, 2000, and 2100, any suitable components may be used to carry out one or more steps of the respective methods

Although the present disclosure has been described with several embodiments, a myriad of changes, variations, alterations, transformations, and modifications may be suggested to one skilled in the art, and it is intended that the present disclosure encompass such changes, variations, alterations, transformations, and modifications as fall within the scope of the appended claims.

## Claims

1. A method (2000) performed by a wireless device, the method comprising:
transmitting (2030), to a network node, a request message requesting the network node to grant the wireless device resources for transmitting a first message;
receiving (2040), from the network node, a grant message granting the wireless device the resources for transmitting the first message;
transmitting (2010) the first message to the network node, the first message comprising a first portion of a Fifth Generation System Temporary Mobile Subscriber Identity, 5G-S-TMSI, wherein the first message comprises a Radio Resource Control, RRC, request; and
transmitting (2020) a second message to the network node, the second message comprising a second portion of the 5G-S-TMSI, wherein the second message comprises an RRC setup complete message.

2. The method of Claim 1, wherein the second message is transmitted in response to receiving an RRC setup message from the network node.

3. The method of any of Claims 1-2 wherein, prior to transmitting the first message and the second message, the method further comprises splitting (2050) the 5G-S-TMSI into the first portion and the second portion.

4. The method of Claim 3, wherein splitting the 5G-S-TMSI into the first portion and the second portion is based on a determination that the length of the 5G-S-TMSI exceeds a limit that the network node is capable of receiving in the first message.

5. The method of any of Claims 1-4, further comprising determining, based at least in part on information received from the network node, which portion of the 5G-S-TMSI to include in the second message.

6. A wireless device (110, 200, 330, 491, 492, 530) comprising:
a memory (130, 215, 390-1, 390-2) configured to store instructions; and
processing circuitry (120, 201, 360, 538) configured to execute the instructions, wherein the wireless device is configured to perform the method of any of Claims 1-5.

7. A method (2100) performed by a network node, the method comprising:
receiving, from a wireless device, a request message requesting the network node to grant the wireless device resources for transmitting a first message;
transmitting, to the wireless device, a grant message granting the wireless device the resources for transmitting the first message;
receiving (2110) the first message from the wireless device, the first message comprising a first portion of a Fifth Generation System Temporary Mobile Subscriber Identity (5G-S-TMSI), wherein the first message comprises a Radio Resource Control, RRC, request;
receiving (2120) a second message from the wireless device, the second message comprising a second portion of the 5G-S-TMSI, wherein the second message comprises an RRC setup complete message; and
obtaining (2130) the 5G-S-TMSI by reassembling the first portion of the 5G-S-TMSI and the second portion of the 5G-TMSI received from the wireless device.

8. The method of Claim 7, wherein a size of the obtained 5G-S-TMSI exceeds a limit that the network node is capable of receiving in the first message.

9. The method of any of Claims 7-8, further comprising transmitting, to the wireless device, one or more of the following:
an RRC setup message, wherein the RRC setup message is transmitted in response to receiving the first message;
information indicating which bits of the 5G-S-TMSI to include in the first portion or the second portion; and
an indicator that indicates a length of the first portion of the 5G-S-TMSI that the network node is capable of receiving in the first message.

10. The method of any of Claims 7-9, further comprising using the 5G-S-TMSI to identify the wireless device in a subsequent message.

11. A network node (160, 330, 412, 520) comprising:
a memory (180, 390-1, 390-2) configured to store instructions; and
processing circuitry (170, 360, 528) configured to execute the instructions, wherein the network node is configured to perform the method of any of Claims 7-10.

12. A computer program product comprising a non-transitory computer readable medium (130, 180, 215, 390-1, 390-2) storing computer readable program code, the computer readable program code comprises instructions to cause the wireless device of claim 6 to execute the steps of method claim 1 or to cause the network node of claim 11 to execute the steps of the method of claim 7.

## Patentansprüche

1. Verfahren (2000), das von einer drahtlosen Vorrichtung durchgeführt wird, wobei das Verfahren umfasst:
Senden (2030) einer Aufforderungsnachricht an einen Netzwerkknoten, die den Netzwerkknoten auffordert, der Drahtlosen Vorrichtung Ressourcen zum Senden der ersten Nachricht zugenehmigen;
Empfangen (2040) einer Genehmigungsnachricht, die der drahtlosen Vorrichtung die Ressourcen zum Senden der ersten Nachricht genehmigt, vom Netzwerkknoten;
Senden (2010) der ersten Nachricht an den Netzwerknoten, wobei die erste Nachricht einen ersten Teil einer temporären Mobilteilnehmerkennung des Systems der fünften Generation, 5G-S-TMSI, umfasst, wobei die erste Nachricht eine Funkressourcensteuerungs-, RRC-, Anforderung, umfasst; und
Senden (2020) einer zweiten Nachricht an einen Netzwerknoten, wobei die zweite Nachricht einen zweiten Teil der 5G-S-TMSI umfasst, wobei die zweite Nachricht eine RRC-Setup-abgeschlossen-Nachricht umfasst.

2. Verfahren nach Anspruch 1, wobei die zweite Nachricht in Reaktion auf den Empfang einer RRC-Setup-Nachricht vom Netzwerkknoten gesendet wird.

3. Verfahren nach einem der Ansprüche 1 bis 2, wobei das Verfahren vor dem Senden der ersten Nachricht und der Zweiten Nachricht ferner ein Teilen (2050) der 5G-S-TMSI in den ersten Teil und den zweiten Teil umfasst.

4. Verfahren nach Anspruch 3, wobei das Teilen der 5G-S-TMSI in den ersten Teil und den zweiten Teil auf einer Bestimmung basiert, dass die Länge der 5G-S-TMSI eine Grenze überschreitet, die der Netzwerkknoten in der ersten Nachricht empfangen kann.

5. Verfahren nach einem der Ansprüche 1 bis 4, ferner umfassend ein Bestimmen, welcher Teil der 5G-S-TMSI in die zeite Nachricht eingefügt werden soll, wenigstens zum Teil basierend auf Informationen, die vom Netzwerkknoten empfangen werden.

6. Drahtlose Vorrichtung (110, 200, 330, 491, 492, 530), umfassend:
einen Speicher (130, 215, 390-1, 390-2), der zum Speichern von Anweisungen konfiguriert ist; und
Verarbeitungsschaltungsanordnung (120, 201, 360, 538), die zum Ausführen der Anweisungen konfiguriert ist, wobei die drahtlose Vorrichutng zum Durchführen des Verfahrens nach einem der Ansprüche 1 bis 5 konfiguriert ist.

7. Verfahren (2100), das von einem Netzwerkknoten durchgeführt wird, wobei das Verfahren umfasst:
Empfangen einer Aufforderungsnachricht von einer drahtlosen Vorrichtung, die den Netzwerkknoten auffordert, der drahtlosen Vorrichtung Ressourcen zum Senden einer ersten Nachricht zu genehmigen;
Senden einer Genehmigungsnachricht, die der drahtlosen Vorrichtung die Ressourcen zum Senden der ersten Nachricht genehmigt, an die drahtlose Vorrichtung;
Empfangen (2110) der ersten Nachricht von der drahtlosen Vorrichtung, wobei die erste Nachricht einen ersten Teil einer temporären Mobilteilnehmerkennung des Systems der fünften Generation, 5G-S-TMSI, umfasst, wobei die erste Nachricht eine Funkressourcenstreuerungs-, RRC-, Anforderung umfasst; und
Empgangen (2120) einer zweiten Nachricht von der drahtlosen Vorrichtung, wobei die erste Nachricht einen zweiten Teil der 5G-S-TMSI umfasst, wobei die zweite Nachricht eine RRC-Setup-abgeschlossen-Nachricht umfasst; und
Erhalten (2130) der 5G-S-TMSI durch Wiederzusammensetzen des ersten Teils der 5G-S-TMSI und des zweiten Teils der 5G-S-TMSI, die von der drahtlosen Vorrichtung empfangen wird.

8. Verfahren nach Anspruch 7, wobei eine Größe der erhaltenen 5G-S-TMSI eine Grenze überschreitet, die der Netzwerkknoten in der ersten Nachricht empfangen kann.

9. Verfahren nach einem der Ansprüche 7 bis 8, ferner umfassend ein Senden an die drahtlose Vorrichtung eines oder mehrerer von Folgenden :
eine RRC-Setup-Nachricht, wobei die RRC-Setup-Nachricht in Reaktion auf den Empfang der ersten Nachricht gesendet wird;
Informationen, die angeben, welche Bits der 5G-S-TMSI in den ersten Teil oder den zweiten Teil engefügt werden sollen; und
einen Indikator, der eine Länge des ersten Teils der 5G-S-TMSI angibt, die der Netzwerkknoten in der ersten Nachricht empfangen kann.

10. Verfahren nach einem der Ansprüche 7 bis 9, ferner umfassend ein Verwenden der 5G-S-TMSI zum Identifizieren der drahtlosen Vorrichtung in einer anschließenden Nachricht.

11. Netzwerkknoten (160, 330, 412, 520), umfassend:
einen Speicher (180, 390-1, 390-2), der zum Speichern von Anweisungen konfiguriert ist; und
Verarbeitungsschaltungsanordnung (170, 360, 528), die zum Ausführen der Anweisungen konfiguriert ist, wobei der Netzwerkknoten zum Durchführen des Verfahrens nach einem der Ansprüche 7 bis 10 konfiguriert ist.

12. Computerprogrammprodukt, umfassend ein nicht-transitorisches computerlesbares Medium (130, 180, 215, 390-1, 390-2), das computerlesbaren Programmcode speichert, wobei der computerlesbare Programmcode Anweisungen zum Veranlassen der drahtlosen Vorrichtung nach Anspruch 6 zum Ausführen der Schritte des Verfahrens nach Anspruch 1 oder zum Veranlassen des Netzwerkknotens nach Anspruch 11 zum Ausführen der Schritte des Verfahrens nach Anspruch 7 umfasst.

## Revendications

1. Procédé (2000) réalisé par un dispositif sans fil, le procédé comprenant :
la transmission (2030), à un noeud de réseau, d'un message de demande demandant au noeud de réseau d'octroyer, au dispositif sans fil, des ressources pour la transmission du premier message;
la réception (2040), depuis le noeud de réseau, d'un message d'octroi octroyant, au dispositif sans fil, les ressources pour la transmission du premier message;
la transmission (2010) du premier message au noeud de réseau, le premier message comprenant une première portion d'une identité d'abonné mobile temporaire de système de cinquième génération, 5G-S-TMSI, dans lequel le premier message comprend une demande de commande de ressource radio, RRC; et
la transmission (2020) d'un deuxième message au noeud de réseau, le deuxième message comprenant une deuxième portion de la 5G-S-TMSI, dans lequel le deuxième message comprend un message d'achèvement de configuration RRC.

2. Procédé selon la revendication 1, dans lequel le deuxième message est transmis en réponse à la réception d'un message de configuration RRC depuis le noeud de réseau.

3. Procédé selon l'une quelconque des revendications 1 à 2, dans lequel, avant la transmission du premier message et du deuxième message, le procédé comprend en outre la division (2050) de la 5G-S-TMSI en la première portion et la deuxième portion.

4. Procédé selon la revendication 3, dans lequel la division de la 5G-S-TMSI en la première portion et la deuxième portion est basée sur une détermination que la longueur de la 5G-S-TMSI dépasse une limite que le noeud de réseau est capable de recevoir dans le premier message.

5. Procédé selon l'une quelconque des revendications 1 à 4, comprenant en outre la détermination, sur la base au moins en partie d'informations reçues depuis le noeud de réseau, de quelle portion de la 5G-S-TMSI inclure dans le deuxième message.

6. Dispositif sans fil (110, 200, 330, 491, 492, 530) comprenant:
une mémoire (130, 215, 390-1, 390-2) configurée pour stocker des instructions; et
une circuiterie de traitement (120, 201, 360, 538) configurée pour exécuter les instructions, dans lequel le dispositif sans fil est configuré pour réaliser le procède selon l'une quelconque des revendications 1 à 5.

7. Procédé (2100) réalisé par un noeud de réseau, le procédé comprenant:
la réception, depuis un dispositif sans fil, d'un message de demande demandant au noeud de réseau d'octroyer, au dispositif sans fil, des ressources pour la transmission du premier message;
la transmission, au dispositif sans fil, d'un message d'octroi octroyant, au dispositif sans fil, les ressources pour la transmission du premier message;
la réception (2110) du premier message depuis le dispositif sans fil, le premier message comprenant une première portion d'une identité d'abonné mobile temporaire de système de cinquième génération (5G-S-TMSI), dans lequel le premier message comprend une demande de commande de ressource radio, RRC;
la réception (2120) d'un deuxième message depuis le dispositif sans fil, le deuxième message comprenant une deuxième portion de la 5G-S-TMSI, dans lequel le deuxième message comprend un message d'achèvement de configuration RRC; et
l'obtention (2130) de la 5G-S-TMSI par le réassemblage de la première portion de la 5G-S-TMSI et de la deuxième portion de la 5G-S-TMSI reçues depuis le dispositif sans fil.

8. Procédé selon la revendication 7, dans lequel une taille de la 5G-S-TMSI obtenue dépasse une limite que le noeud de réseau est capable de recevoir dans le premier message.

9. Procédé selon l'une quelconque des revendications 7 à 8, comprenant en outre la transmission, au dispositif sans fil, d'un ou plusieurs de ce qui suit:
un message de configuration RRC, dans lequel le message de configuration RRC est transmis en réponse à la réponse du premier message;
des informations indiquant quels bits de la 5G-S-TMSI inclure dans la première portion ou la deuxième portion; et
un indicateur qui indique une longueur de la première portion de la 5G-S-TMSI que le noeud de réseau est capable de recevoir dans le premier message.

10. Procédé selon l'une quelconque des revendications 7 à 9, comprenant en outre l'utilisation de la 5G-S-TMSI pour identifier le dispositif sans fil dans un message suivant.

11. Noeud de réseau (160, 330, 412, 520) comprenant:
une mémoire (180, 390-1, 390-2) configurée pour stocker des instructions; et
une circuiterie de traitement (170, 360, 528) configurée pour exécuter les instructions, dans lequel le noeud de réseau est configuré pour réaliser le procédé selon l'une quelconque des revendications 7 à 10.

12. Produit de programme d'ordinateur comprenant un support non transitoire lisible par ordinateur (130,180, 215, 390-1,390-2) stockant un code de programme lisible par ordinateur, le code de programme lisible par ordinateur comprend des instructions pour amener le dispositif sans fil selon la revendication 6 à exécuter les étapes du procédé selon la revendication 1 ou pour amener le noeud de réseau selon la revendication 11 à exécuter les étapes du procédé selon la revendication 7.
